# FASCICULE DE BREVET EUROPEEN

(11) **EP 1 536 174 B1**
(45) Date de publication et mention de la délivrance du brevet: **05.03.2008**
(21) Numéro de dépôt: 04292695.6
(22) Date de dépôt: 15.11.2004
(51) Int. Cl.: F16L 19/00

(54) **Ecrou de raccordement de pièces tubulaires**
Überwurfmutter zur Verbindung von Rohren
Swivel nut for the connection of pipes

(30) Priorité: 28.11.2003 FR 0313981
(43) Date de publication de la demande: 01.06.2005
(73) Titulaire: Trelleborg Industrie, 63000 Clermont-Ferrand (FR)
(72) Inventeur: Desnier, Georges, 63360 Gerzat (FR)
(74) Mandataire: Laget, Jean-Loup

(56) Documents cités:
- EP-A- 0 896 161
- DE-C- 928 078
- FR-A- 1 052 060
- FR-A- 1 245 743
- GB-A- 1 033 862
- US-A- 2 854 099

## Description

La présente invention concerne un écrou de raccordement destiné à raccorder deux pièces tubulaires. Ces pièces tubulaires peuvent servir à raccorder des conduites souples (tuyaux à b ase de caoutchouc ou de matière thermoplastique) à des installations fixes ou mobiles.

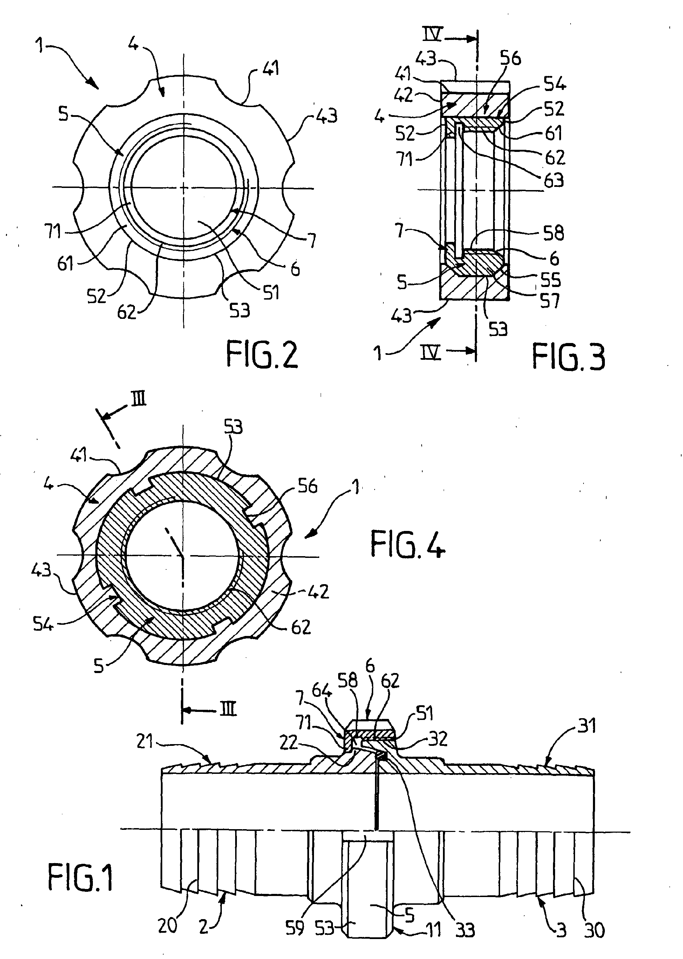

On connaît notamment les écrous 11 représentés sur la figure 1 qui permettent de raccorder une première pièce tubulaire 3 à une seconde 2.

Ce type d'écrou de raccordement 11 est constitué d'un corps 5 sensiblement cylindrique comprenant au moins un taraudage 62 destiné à coopérer avec un filetage externe 32 de la première pièce tubulaire 3 et une butée 71 destinée à coopérer avec une collerette 22 de la seconde pièce tubulaire 2.

L'écrou de raccordement 11 et les pièces tubulaires 2 et 3 sont par exemple constitués d'acier inoxydable.

Ce type d'écrou assure un raccordement étanche mais le serrage manuel de ce type d'écrou, qui facilite la mise en place des raccordements, est difficile voire impossible.

Aussi, le frottement de la main sur le métal de l'écrou étant trop faible, la main glisse lorsqu'elle doit appliquer un couple apte à effectuer un serrage intense de l'écrou, le serrage intense étant indispensable à l'étanchéité du raccordement entre les tuyaux. Le serrage est donc trop difficile de façon manuelle à partir d'une certaine force à appliquer.

De plus, si la main essaye d'appliquer un couple apte à serrer de façon satisfaisante l'écrou de raccordement, elle augmente les frottements nécessaires au serrage en se resserrant autour de l'écrou, ce qui risque alors de blesser la main. Par conséquent le serrage doit être réalisé par un outil adapté comme par exemple une clé de serrage qui permet d'appliquer à l'écrou des couples plus importants que la main.

Cependant les couples de serrage appliqués sont trop importants avec l'utilisation d'une telle clé ce qui a pour conséquence le grippage des parties en contact c'est à dire le taraudage 62 et le filetage externe 32, empêchant tout démontage ultérieur du raccordement de tuyaux.

Une solution pourrait consister à faire porter aux techniciens qui installent les raccordements de tuyaux des gants constitués d'une matière dont le frottement sur le métal est important. Cependant le port de tels gants serait inconfortable pour les techniciens et rendrait la manipulation des écrous plus incertaine.

Enfin, l'utilisation de tels écrous constitués d'acier inoxydable est préjudiciable lors du déplacement des tuyaux.

En effet, les écrous forment des épaulements par rapport à la surface générale des tuyaux, car ils présentent un diamètre supérieur à celui des tuyaux. Ils constituent donc les parties du tuyau qui frottent contre le sol. De plus, les écrous étant constitués d'un matériau plus dur que le reste du tuyau et que le revêtement du sol, leur frottement contre le sol peut endommager le revêtement du sol qui, notamment dans l'industrie agro-alimentaire, est fragile et dont l'intégrité doit être respectée pour satisfaire aux conditions d'hygiène imposées à ce type d'industrie. Il existe un risque d'endommagement du sol consécutif à un choc lors de la chute du flexible lors du montage ou lors de la manipulation des flexibles.

L'utilisation de ce type d'écrou est également préjudiciable à sa propre intégrité. En effet, l'acier inoxydable étant un métal relativement malléable, un choc en surface de l'écrou provoqué par une manipulation brutale des tuyaux, peut déformer l'écrou non seulement en surface mais encore dans sa structure interne, empêchant tout serrage efficace ultérieur de l'écrou.

Une solution est donc de fabriquer des écrous en un matériau moins dur que le métal pour remédier à tous les inconvénients cités précédemment mais ce type d'écrous présente néanmoins l'inconvénient d'être trop mou. En effet, lors de la succession de serrages et desserrages, le taraudage de l'écrou, effectué dans un matériau plus mou se déforme et s'use, créant ainsi un défaut d'étanchéité au niveau de l'écrou même lorsqu'un couple de forces important lui est appliqué.

Le document DE 928 078 C décrit un écrou selon le préambule de la revendication 1.

L'invention a pour but de proposer un nouveau type d'écrou qui évite les inconvénients précités et qui permette son serrage manuel.

A cet effet, l'invention a pour objet un écrou de raccordement destiné à raccorder deux pièces tubulaires, la première pièce tubulaire présentant à son extrémité un filetage externe, et la seconde présentant à son extrémité une collerette radialement externe, ledit écrou de raccordement étant du type comportant un corps cylindrique en métal présentant un alésage traversant, ledit alésage étant constitué de deux parties de diamètres différents, la première partie dudit alésage étant de diamètre supérieur à celui de la seconde partie et présentant un taraudage destiné à coopérer avec ledit filetage externe, la seconde partie dudit alésage constituant une butée destinée à coopérer avec ladite collerette, caractérisé en ce que ledit corps cylindrique est enrobé au niveau de sa surface périphérique externe d'un manchon de préhension en matériau polymérique solidarisé à ladite surface périphérique externe.

De manière préférentielle, la surface périphérique externe du corps cylindrique comporte au moins une encoche longitudinale dans laquelle le manchon de préhension s'étend pour solidariser mécaniquement ledit corps cylindrique avec ledit manchon de préhension.

Avantageusement, la surface périphérique externe du manchon de préhension présente des rainures longitudinales concaves régulièrement réparties et angulairement espacées.

Selon un mode de réalisation préféré, les faces d'extrémité du corps cylindrique sont raccordées à la surface périphérique externe via une partie tronconique et le manchon s'étend d'une partie tronconique à l'autre.

De préférence, le manchon de préhension est adhérisé au corps cylindrique.

Selon une variante de réalisation de l'invention, le matériau polymérique constituant le manchon de préhension est un élastomère vulcanisable.

Selon une autre variante de réalisation de l'invention, le matériau polymérique constituant le manchon de préhension est un élastomère thermoplastique.

Selon une dernière variante de réalisation de l'invention, le matériau polymérique constituant le manchon de préhension est un plastique souple.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue longitudinale en demi-coupe de l'ensemble formé par deux embouts de raccordement raccordés par un écrou de raccordement selon l'art antérieur ;
- la figure 2 est une vue de face d'un écrou selon l'invention ;
- la figure 3 est une coupe selon la ligne brisée III-III de la figure 4, et
- la figure 4 est une coupe selon la ligne IV-IV de la figure 3.

La figure 1 illustre l'état de la technique précité.

L'écrou 11 constitué d'un corps sensiblement cylindrique 5, présente un alésage traversant 51 constitué de deux parties 6 et 7.

La première partie 6, de diamètre supérieur à celui de la seconde 7, comporte le taraudage 62.

La seconde partie 7 comporte la butée annulaire 71.

L'écrou 11, permet de raccorder deux extrémités tubulaires 2 et 3 qui sont, dans ce cas, deux embouts de raccordement 20 et 30 de type DIN. Les parties 2 et 3 peuvent être du type à souder ou à visser.

Les embouts de raccordement 20 et 30 diffèrent par leurs extrémités 22 et 32.

Le premier embout de raccordement 30 présente d'un côté une extrémité crantée 31 et de l'autre le filetage externe 32 et une gorge annulaire interne 33 pour accueillir un joint d'étanchéité.

Le second embout de raccordement 20 présente également une extrémité crantée 21, mais sa seconde extrémité est munie de la collerette 22 s'étendant radialement vers l'extérieur.

Un espace 64 est défini entre la face interne 58 du corps 5, la collerette 22 et le filetage 32.

Par leur première extrémité crantée 21 et 31, les embouts de raccordement 20 et 30 sont enfoncés à force dans les extrémités des tuyaux à raccorder, les crans permettant ainsi le maintien de cet assemblage.

Les secondes extrémités sont, quant à elles, mises bout à bout, après avoir placé un joint d'étanchéité dans la gorge annulaire 33 et sont assemblées par l'écrou 11. Ce dernier est mis en butée (par la butée 71) contre la collerette 22 du second embout de raccordement 20 et l'écrou 11 est vissé autour du filetage externe 32 du premier embout 30. Le vissage et le serrage de l'écrou 11 permettent non seulement d'établir le raccordement mais encore d'assurer son étanchéité.

Néanmoins, ce type d'écrou 11 est constitué par exemple d'acier inoxydable et présente une surface périphérique externe 53 lisse et des cannelures 59 pour le serrage à l'aide d'un outil. Pour les raisons énoncées précédemment, il est difficile d'en effectuer un serrage manuel satisfaisant et sûr.

En se reportant à la figure 2, l'on voit que l'écrou de raccordement 1 selon l'invention est constitué de deux parties : un corps cylindrique 5 enrobé d'un manchon de préhension 4.

Le corps cylindrique 5 présente également un alésage traversant 51 en deux parties 6 et 7.

La première partie 6, de diamètre supérieur à celui de la seconde partie 7, présente aussi un taraudage 62 mais, sur la figure 3, ledit taraudage 62 débouche sur la face d'extrémité 52 du corps cylindrique 5 par une section tronconique 61 non taraudée, en augmentant de diamètre.

La seconde partie 7, présente, comme dans l'art antérieur, le diamètre le plus petit pour constituer la butée 71.

Le corps cylindrique 5 est constitué de métal qui peut être de préférence de l'acier inoxydable.

Le manchon de préhension 4 est de forme sensiblement cylindrique et disposé au niveau de la surface périphérique externe 53 du corps 5.

Le manchon 4 présente sur sa surface périphérique externe 43, six rainures 41 longitudinales concaves, régulièrement espacées entre elles selon un angle de 60°.

Le manchon 4 est constitué d'un matériau polymérique d'élastomère vulcanisable, d'élastomère thermoplastique ou de plastique souple.

L'élastomère vulcanisable peut être choisi parmi l'un des quelconques composés de la liste non limitative suivante: le monomère d'éthylène propylène diène (EPDM), le caoutchouc naturel (NR), le caoutchouc de styrène butadiène (SBR), le caoutchouc de polychloroprène (CR) et le copolymère d'éthylène / acétate de vinyle (EVA).

Un élastomère thermoplastique (TPE) peut être par exemple un uréthane thermoplastique (TPU), un vulcanisat thermoplastique (TPV), un poly(styrène butadiène styrène) (SBS), un poly(styrène éthylène butadiène styrène) (SEBS).

Parmi les plastiques souples, du chlorure de polyvinyle plastifié (PVC), du polyamide et du polyéthylène (PE) peuvent par exemple être utilisés.

De manière identique à l'écrou 11 appartenant à l'art antérieur, le corps cylindrique 5 de l'écrou 1 est destiné à recevoir dans sa deuxième partie 7, la collerette 22 de la seconde pièce tubulaire 2 (non représentée) pouvant être une extrémité de tuyau ou un embout de raccordement 20, ladite collerette 22 étant mise en butée contre la butée 71. Puis l'écrou 1 est vissé par son taraudage 62 autour du filetage externe 32 de l'extrémité de la première pièce tubulaire 3 (non représentée), solidarisant mécaniquement l'ensemble constitué par l'écrou 1 et les pièces tubulaires 2 et 3. Le raccordement étanche est ainsi réalisé.

En outre, le matériau polymérique constituant le manchon de préhension 4 permet une meilleure préhension de l'écrou 1 par la main.

En effet, la main adhérant plus à l'écrou 1, un serrage manuel de l'écrou 1 sans blessure de la main est alors possible.

De plus, les rainures concaves 41 du manchon 4 constituent des prises pour la main lors du serrage manuel, permettant ainsi un serrage plus intense de l'écrou 1, et donc une meilleure étanchéité du raccordement.

Cependant, le manchon 4 peut être lisse ou comporter des rainures 41 dont le nombre, la forme et la disposition peuvent être différents.

De plus, le manchon 4 permet d'augmenter le diamètre où s'applique l'effort, ce qui augmente le couple de serrage garantissant une meilleure étanchéité.

Enfin, le manchon 4 est constitué de préférence d'un matériau de couleur.

Préférentiellement, le manchon 4 est thermo-moulé autour du corps cylindrique 5.

En se reportant à la figure 3, l'on voit que la première partie 6 du corps cylindrique 5 présente non seulement la section tronconique 61 et le taraudage 62 cités précédemment mais encore une gorge interne annulaire 63 au niveau de la surface interne 58 du corps 5.

Les faces d'extrémité 52 du corps cylindrique 5 sont raccordées à la surface périphérique externe 53 via une partie tronconique 55.

Le manchon 4, s'étend d'une face d'extrémité 52 à l'autre, en enserrant la partie centrale du corps 5 définie par la surface périphérique externe 53 et les parties tronconiques 55 précitées. Cette partie 57 ainsi ancrée dans le manchon 4, solidarise le manchon 4 au corps 5 et empêche tout déplacement longitudinal du manchon 4 par rapport au corps 5 lors de la manipulation de l'écrou 1.

De plus, l'épaisseur du manchon 4 entre les faces d'extrémité 42 est supérieure à celle du corps entre les faces d'extrémité 52 ce qui renforce la solidité dudit manchon 4 et la solidarisation de l'ensemble formé par le manchon 4 et le corps 5.

En se reportant à la figure 4, l'on voit que des encoches 54 sont formées longitudinalement sur le corps cylindrique 5 et sont disposées de façon diamétralement opposées deux à deux et en angle droit entre elles.

Le manchon de préhension 4 s'étend dans les encoches 54 ce qui solidarise mécaniquement ledit corps cylindrique 5 avec ledit manchon de préhension 4 lors du mouvement de rotation de l'écrou 1 imposé par le vissage. Ceci permet ainsi un serrage intense de l'écrou 1 indispensable à une étanchéité satisfaisante du raccordement.

Cependant, le corps cylindrique 5 peut ne présenter aucune encoche 54 ou en présenter dont le nombre, la forme et la disposition peuvent être différents.

En outre, selon la figure 3, l'on voit que les encoches 54 sont formées sur toute la hauteur de la partie 57, car au niveau des encoches 54, les faces d'extrémité 52 se rejoignent par une surface plane 56 représentant le fond de l'encoche 54.

Bien entendu, les encoches peuvent présenter une hauteur inférieure à celle de la partie 57.

Le manchon 4 peut également être adhérisé au corps cylindrique 5.

Dans un exemple de réalisation, le diamètre du corps cylindrique 5 est de 60mm entre deux points appartenant au fond des encoches 54 et diamétralement opposés, et l'épaisseur du corps 5 est de 25mm.

Selon ce même exemple de réalisation, le diamètre du corps cylindrique 5 est de 40mm entre deux points appartenant à la surface interne 58 au niveau de la butée 71.

Selon cet exemple de réalisation, le diamètre du manchon de préhension 4 est de 90mm entre deux points diamétralement opposés au niveau de la surface périphérique externe 43 hors des rainures 41 et l'épaisseur du manchon 4 est de 29mm entre les faces d'extrémité 42 opposées.

Cependant, ce type d'écrou 1 peut être réalisé avec un corps 5 ou un manchon 4 présentant un diamètre différent.

Il peut également être réalisé avec un corps 5 permettant de loger différents diamètres de tuyaux ou d'embouts de raccordements 20 et 30, lesdits embouts 20 et 30 pouvant être par exemple du type de ceux utilisés dans l'industrie agroalimentaire et pharmaceutique et notamment ceux du type MACON, SMS, DIN ou RJT.

Enfin, des essais, dont les résultats ne sont pas présentés ont été effectués pour tester l'efficacité du serrage manuel avec un écrou selon l'invention.

L'essai a été effectué sur un tuyau flexible d'un diamètre de 50mm du type de ceux utilisés dans l'industrie agroalimentaire.

L'écrou, du type de l'invention, accueille des embouts de raccordement du type MACON.

L'essai consiste à mesurer l'étanchéité de l'écrou serré manuellement lors du passage de fluides acheminés dans les tuyaux avec une pression hydrostatique croissante.

Les résultats ont montré que l'étanchéité est parfaite jusqu'à 30 bars. Elle n'a malheureusement pas pu être mesurée à des pressions supérieures car le tuyau ne résiste pas à des pressions supérieures à 30 bars et cède. L'étanchéité de l'écrou serré manuellement est donc parfaite dans des conditions normales d'utilisation de tuyaux du type de ceux utilisés en industrie agro-alimentaire.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leur combinaison si celles-ci entrent dans le cadre de l'invention.

## Revendications

1. Ecrou de raccordement (1) destiné à raccorder deux pièces tubulaires (2,3), la première pièce tubulaire (3) présentant à son extrémité un filetage externe (32), et la seconde (2) présentant à son extrémité une collerette (22) radialement externe, ledit écrou de raccordement (1) étant du type comportant un corps cylindrique (5) en métal présentant un alésage traversant (51), ledit alésage (51) étant constitué de deux parties (6,7) de diamètres différents, la première partie (6) dudit alésage étant de diamètre supérieur à celui de la seconde partie (7) et présentant un taraudage (62) destiné à coopérer avec ledit filetage externe (32), la seconde partie (7) dudit alésage (51) constituant une butée (71) destinée à coopérer avec ladite collerette (22), ledit corps cylindrique (5) étant enrobé au niveau de sa surface périphérique externe (53) d'un manchon de préhension (4) solidarisé à ladite surface périphérique externe (53), la surface périphérique externe (43) du manchon de préhension (4) présentant des rainures (41) longitudinales concaves régulièrement réparties et angulairement espacées, **caractérisé en ce que** ledit manchon de préhension est en matériau polymérique, lesdites rainures longitudinales présentant une section transversale de forme arrondie.

2. Ecrou selon la revendication 1, **caractérisé en ce que** la surface périphérique externe (53) du corps cylindrique (5) comporte au moins une encoche (54) longitudinale dans laquelle le manchon de préhension (4) s'étend pour solidariser mécaniquement ledit corps cylindrique (5) avec ledit manchon de préhension (4)..

3. Ecrou selon l'une quelconque des revendications 1 à 2, **caractérisé en ce que** les faces d'extrémité (52) du corps cylindrique (5) sont raccordées à la surface périphérique externe (53) via une partie tronconique (55) et le manchon (4) s'étend d'une partie tronconique (55) à l'autre.

4. Ecrou selon l'une quelconque des revendications 1 à 3, **caractérisé en ce que** le manchon de préhension (4) est adhérisé au corps cylindrique (5).

5. Ecrou selon l'une quelconque des revendications 1 à 4, **caractérisé en ce que** le matériau polymérique constituant le manchon de préhension (4) est un élastomère vulcanisable.

6. Ecrou selon l'une quelconque des revendications 1 à 4, **caractérisé en ce que** le matériau polymérique constituant le manchon de préhension (4) est un élastomère thermoplastique.

7. Ecrou selon l'une quelconque des revendications 1 à 4, **caractérisé en ce que** le matériau polymérique constituant le manchon de préhension (4) est un plastique souple.

## Claims

1. Coupling nut (1) intended for coupling two tubular components (2, 3), the first tubular component (3) having an external screw thread (32) at its end, and the second (2) having a radially external flange (22) at its end, the said coupling nut (1) being of the type comprising a cylindrical metal body (5) with a through-bore (51), the said bore (51) being made up of two parts (6, 7) of different diameters, the first part (6) of the said bore being of a diameter greater than that of the second part (7) and having a tapped thread (62) intended to collaborate with the said external screw thread (32), the second part (7) of the said bore (51) constituting an end stop (71) intended to collaborate with the said flange (22), the said cylindrical body (5) being covered on its external peripheral surface (53) with a gripping sleeve (4) secured to the said external peripheral surface (53), the external peripheral surface (43) of the gripping sleeve (4) having uniformly distributed and angularly spaced concave longitudinal striations (41), **characterized in that** the said gripping sleeve is made of a polymeric material, the said longitudinal striations having a cross section of rounded shape.

2. Nut according to Claim 1, **characterized in that** the external peripheral surface (53) of the cylindrical body (5) comprises at least one longitudinal notch (54) into which the gripping sleeve (4) extends in order mechanically to secure the said cylindrical body (5) and the said gripping sleeve (4) together.

3. Nut according to either one of Claims 1 and 2, **characterized in that** the end faces (52) of the cylindrical body (5) are connected to the external peripheral surface (53) via a frustoconical part (55) and the sleeve (4) extends from one frustoconical part (55) to the other.

4. Nut according to any one of Claims 1 to 3, **characterized in that** the gripping sleeve (4) is bonded to the cylindrical body (5).

5. Nut according to any one of Claims 1 to 4, **characterized in that** the polymeric material of which the gripping sleeve (4) is made is a curable elastomer.

6. Nut according to any one of Claims 1 to 4, **characterized in that** the polymeric material of which the gripping sleeve (4) is made is a thermoplastic elastomer.

7. Nut according to any one of Claims 1 to 4, **characterized in that** the polymeric material of which the gripping sleeve (4) is made is a flexible plastic.

## Patentansprüche

1. Überwurfmutter (1) zum Verbinden Von zwei röhrenförmigen Bauteilen (2, 3), wobei das erste röhrenförmige Bauteil (3) an seinem Ende ein Außengewinde (32) und das zweite (2) an seinem Ende einen äußeren radialen Kragen (22) aufweist, wobei die Überwurfmutter (1) einen zylindrischen Körper (5) aus Metall aufweist, der eine durchgehende Bohrung (51) besitzt, wobei die Bohrung (51) aus zwei Abschnitten (6, 7) mit unterschiedlichen Durchmessern besteht, wobei der erste Abschnitt (6) der Bohrung einen größeren Durchmesser ais der zweite Abschnitt (7) besitzt und ein Innengewinde (62) aufweist, welches mit dem Außengewinde (32) zusammenwirken kann, wobei der zweite Abschnitt (7) der Bohrung (51) einen Anschlag (71) bildet, der mit dem Kragen (22) zusammenwirken kann, wobei der zylindrische Körper (5) an seiner äußeren Umfangsfläche (53) von einer Griffhülse (4) umgeben ist, die mit der äußeren Umfangsfläche (53) verbunden ist, wobei die äußere Umfangsfläche (43) der Griffhülse (4) gleichmäßig verteilte und in einem Winkelabstand zueinander angeordnete konkave Längsrillen (41) aufweist, **dadurch gekennzeichnet, dass** die Griffhülse aus Polymermaterial besteht, wobei die Längsrillen einen Querschnitt mit abgerundeter Form aufweisen.

2. Mutter gemäß Anspruch 1, **dadurch gekennzeichnet, dass** die äußere Umfangsfläche (53) des zylindrischen Körpers (5) wenigstens eine längliche Auskerbung (54) aufweist, in welche die Griffhülse (4) eingreift, um den zylindrischen Körper (5) mechanisch mit der Griffhülse (4) zu verbinden.

3. Mutter gemäß einem der Ansprüche 1 bis 2, **dadurch gekennzeichnet, dass** die Stirnseiten (52) des zylindrischen Körpers (5) über einen kegelstumpfförmigen Abschnitt (55) mit der äußeren Umfangsfläche (53) verbunden sind und die Hülse (4) sich von einem kegelstumpfförmigen Abschnitt (55) zum anderen erstreckt.

4. Mutter gemäß einem der Ansprüche 1 bis 3, **dadurch gekennzeichnet, dass** die Griffhülse (4) mit dem zylindrischen Körper (5) verklebt ist.

5. Mutter gemäß einem der Ansprüche 1 bis 4, **dadurch gekennzeichnet, dass** das die Griffhülse (4) bildende Polymermaterial ein vulkanisierbares Elastomer ist.

6. Mutter gemäß einem der Ansprüche 1 bis 4, **dadurch gekennzeichnet, dass** das die Griffhülse (4) bildende Polymermaterial ein thermoplastisches Elastomer ist.

7. Mutter gemäß einem der Ansprüche 1 bis 4, **dadurch gekennzeichnet, dass** das die Griffhülse (4) bildende Material ein nachgiebiger Kunststoff ist.
